# EUROPEAN PATENT APPLICATION

(11) **EP 1 176 356 A2**
(43) Date of publication of application: **30.01.2002**
(21) Application number: 01500189.4
(22) Date of filing: 17.07.2001
(51) Int. Cl.: F16M 11/08

(54) **Activating device for turning platform**

(30) Priority: 26.07.2000 ES 200001868
(71) Applicant: Pedro Palomer, Enrique, 08301 Mataro (ES); Vaz Temprano, Ursicino, 08032 Barcelona (ES)
(72) Inventor: Pedro Palomer, Enrique, 08301 Mataro (ES); Vaz Temprano, Ursicino, 08032 Barcelona (ES)
(74) Representative: SUGRANES - VERDONCES - FERREGÜELA

(57) **Abstract**

Activating device for turning platforms, which comprises a support (1); a motor (2) that moves a driving wheel (3); a wheel (4) driven by the driving wheel (3); a turning platform (5) coaxial to the driven wheel (4) and electrical connection means (19) between the support (1) and the turning platform (5). The driven wheel (4) and the turning platform are linked together by coupling means (6) which comprise a turning element by rolling and/or friction, so that it allows the turning platform (5) to support external forces opposed to that of the driven wheel (4), even stopping or causing the turning of the wheel in the opposite direction of the turning platform, without altering or opposing the movement of the driven wheel.

## Description

### Technical Sector of the Invention.

The invention refers to an activating device for turning platforms.

### Background to the invention.

Numerous embodiments of activating devices for turning platforms are known of the type used for supporting turning display stands or other elements capable of being subject to a turning movement, the main feature of which is their turning ability when connected to a current collector.

The known activating devices for turning platforms comprise a support element, a motor and a turning platform, integrally dragged by the motor and capable of receiving the structure to which it is intended to provide with a turning movement.

The main problem which the known activating devices for turning platforms present is caused by the obstruction of the motor's dragging movement or any of the integral elements of the same. It is usual that, because of any reason external to the mechanism, a resistance to the natural movement of the motor is created which can be caused by a person blocking the structure's rotating movement, by any object placed within the turning radius or by handling the turning platform.

Any of the earlier described obstacles to the natural turning of the motor and the platform cause, in the vast majority of cases, the interruption of the movement because of either the deterioration or breaking of any of the transmission elements. In some cases it is a gear's tooth which breaks, sometimes it is the motor shaft itself which cannot support the torque produced by the force of the motor and on the other side the resistance to the rotation movement which it meets. In other instances a short-circuit occurs in the motor which subsequently burns when its movement is blocked by an external force. In any case, the problem existing with this type of device is obvious.

As a consequence of the problems described earlier, the known activating devices for turning platforms can only be used with operational guarantees in inaccessible places, or at least out of public reach, the usefulness of the device being lost or greatly limited.

The use of this type of device is not very widespread in some sectors because of their unreliability mainly as a consequence of their high sensitivity to external agents and particularly to forces which run counter to the platform's turning direction applied to the same from the outside.

As has already been said previously, for the moment the only way which has been found to avoid the rapid deterioration of activating devices for turning platforms is to locate them well out of people's reach and in locations where they may not be affected by external agents.

### Explanation of the invention.

With the aim of contributing a solution to the previously described problems, stemming from the ease with which the known activating devices for turning platforms break and get damaged, a new activating device for turning platforms with a new structure and function is herein disclosed.

The activating device for turning platforms object of the present invention is of the type described in the preamble of claim 1.

In essence, the activating device for turning platforms according to the invention is characterized in that the driven wheel and the turning platform are linked together by a coupling means which comprise a turning element by rolling and/or friction, so that it allows the turning platform to support external forces opposed to the turning of the driven wheel, which cause the stopping or even the turning of the wheel in the opposite direction of the turning platform, without altering or affecting the movement of the driven wheel.

This feature of the activating device for turning platforms of the present invention solves the problems arising from the resistances applied to the motor's natural movement.

In the device according to the invention a turning movement by indirect pulling takes place caused by the effect of the turning element, i.e., in the device according to the invention, any force applied on the turning platform, either in the same or opposite direction of the motor, does not affect the continuous movement of the motor, the driving wheel or the driven wheel. According to the invention, it is possible to completely stop the turning platform's movement without having a negative effect on any of the device's components, especially the motor.

The rolling and/or friction turning element of the coupling means between the turning platform and the driven wheel isolates the turning platform movement with respect to the driving wheel, the movements being totally dependent when no external force is applied.

According to another feature of the invention, the electrical connection means between the support and the turning platform comprise some movable contacts and some corresponding fixed contacts for the conduction of the current from the fixed part to the movable part of the device through the interior of the shaft.

According to another feature of the invention, the movable contacts comprise two brushes, an exterior one and an interior one which, in turn, comprise a brush-holder of the type that incorporate a self-adjusting tightening element and the fixed contacts comprise an exterior contact shaped like a circular crown, and an inner contact concentric with respect to the outer one.

In accordance with another feature, the activating device for turning platforms of the invention comprise means for holding at least a connection cable through its interior to the exterior surface of the turning platform.

According to another feature of the present invention, the means for holding comprise a washer provided with at least one trap door.

The previous feature allows any type of cable through the device interior, by the shaft interior to the turning platform.

In accordance with another feature of the invention, the turning platform has a current collector.

According to a preferred embodiment of the invention, the turning element by rolling and/or friction of the coupling means between the driven wheel and the turning platform comprises an axial bearing.

In accordance with another embodiment of the invention, the turning element by rolling and/or friction of the coupling means between the driven wheel and the turning platform comprises a washer which is made out of sliding material.

In accordance with the features of the present invention, the turning platform and the driven wheel can be subject to different traction forces that can even be opposing. The driven wheel is constantly subject to the turning movement caused by the driving wheel whereas the platform can be subject to mechanical traction forces caused by external elements. As has already been said earlier, if there are not external forces which affect the turning platform, both elements, platform and driven wheel, move simultaneously. This transmission system can be applied for moving structures of any external shape, weight and size.The described features of the activating device for turning platforms according to the invention contribute a solution to the drawbacks described earlier which the known embodiments of activating devices present.

### Brief description of the drawings.

In the drawings of this specification an embodiment example of the activating device for turning platforms object of the present invention is represented. In said drawings,

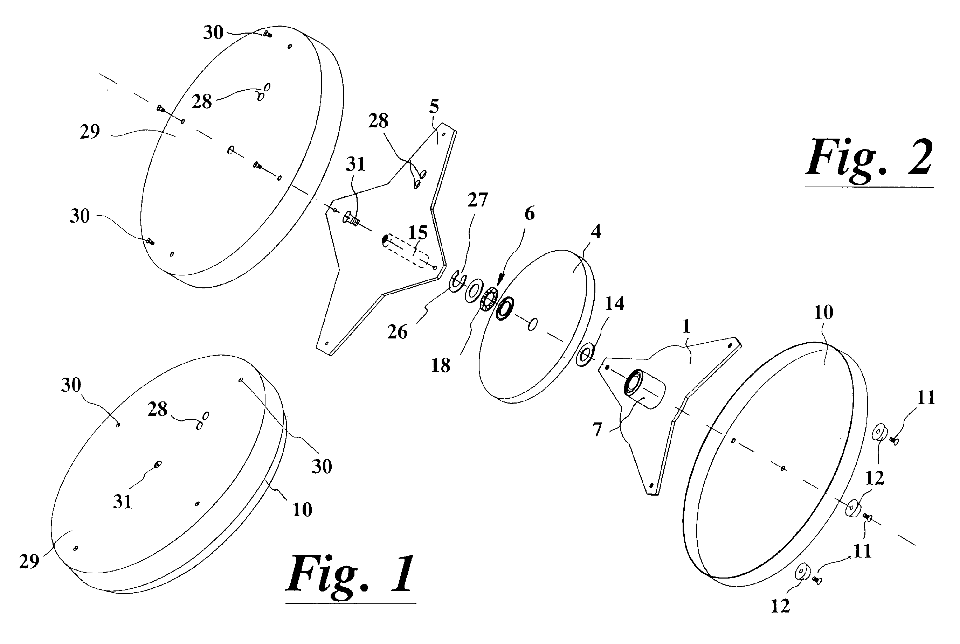

Fig. 1 is a perspective view of the embodiment example of the activating device for turning platforms according to the invention;
Fig. 2 shows a partial exploded of the different elements which make up the device of the invention, separated and in correlative fitted position;

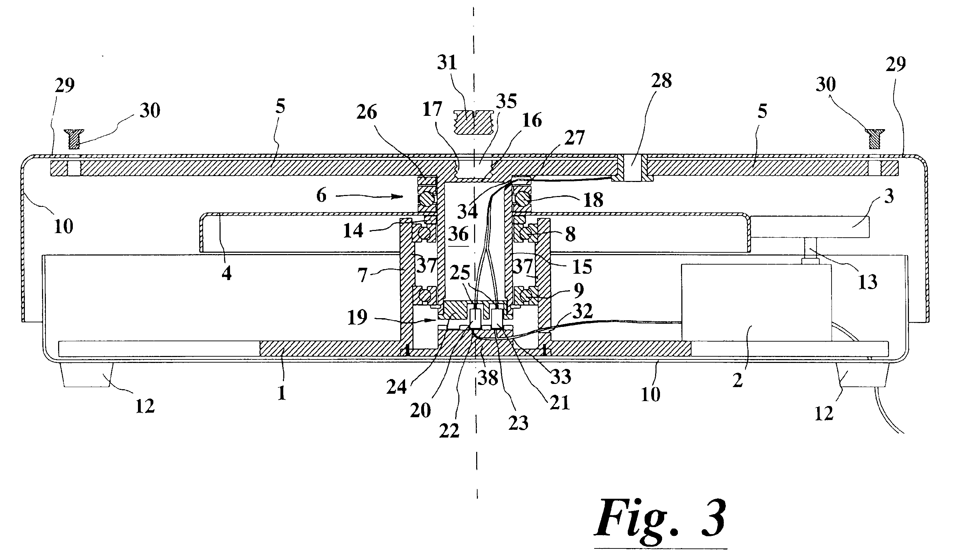

Fig. 3 is a section view of the activating device for turning platforms according to the invention; and

### Detailed description of the embodiment example.

The description which follows refers to the previously described drawings, making it possible to observe in detail the different parts which make up the activating device for turning platforms in accordance with a preferred embodiment of the invention.

In said drawings it can be observed that, as main elements, the device comprises a support 1, an electromotor 2, a driving wheel 3, a driven wheel 4, a turning platform 5 and coupling means 6 between the turning platform 5 and the driven wheel 4.

The support 1 is shaped like a three-pointed star and in its central area has a hollow tubular extension 7. Near each end of extension 7 a respective bearing 8 and 9 is arranged, preferably a roller bearing, each of which is positioned at one end of a positioning projection 37 of the turning platform 5. The bearing 8 works by axial pressure and radial pressure, whereas the bearing 9 only works by radial pressure.

Alternatively, the support 1 can have any setting, both for technical and aesthetic reasons.

Underneath the support 1 the device has a casing 10, which is linked to support 1 by means of screws 11 arranged at some respective feet 12.

The electromotor 2 is fixed to the surface of support 1. The motor is powerful enough to cause the rotation movement of turning platform 5 and its load.

The shaft 13 of electromotor 2 makes the driving wheel 3 rotate, which in turn makes the driven wheel 4 turn that rests on a washer 14 supported on a bearing 8 of extension 7 of the support 1.

The turning platform 5 is provided with a tubular extension 15 in which two cavities can be distinguished, an upper cavity 35 and a lower cavity 36, separated from one another by means of a central partition 16. The tubular extension 15 is perpendicular to the angle which defines platform 5 and the right diameter to be inserted into the interior of extension 7 of the support 1.

The lower cavity 36 takes up most of the interior of extension 15. The electrical connection means 19 are at the open end of lower cavity 36. The inside of tubular extension 15 is provided with a positioning projection 37, the ends of which fulfill a stop function for the positioning of each of the respective bearings 8 and 9.

The upper cavity 35 of extension 15 is considerably smaller than that of lower cavity 36 and its inner lateral surface has a screw thread 17.

The screw thread 17 of the inner side surface of upper cavity 35 of extension 15 of turning platform 5 has, as its main objective, to receive a rod provided with an outer screw thread complementary to the previous one, belonging to an external element to the device capable of receiving a rotation movement.

The function of the central partition 16 is to insulate the two upper cavities 35 and lower 36 so that it ensures the watertightness of the inside of the device central shaft, especially the electrical connection means 19, and it is insulated from external agents, especially the entrance of any liquid product which could damage the electrical connections or cause a short-circuit.

The central partition 16 can be a part of extension 15 of turning platform 5 or, alternatively, be an element which is integrally joined to the same.

The coupling means 6 between the turning platform 5 and the driven wheel 4 comprise a roller bearing 18 by axial pressure. This bearing 18 allows the free turning of turning platform 5 with respect to the driven wheel 4, should turning platform 5 be subject to external forces.

Alternatively, to the axial bearing 18 the device can incorporate a washer made out of sliding material which would fulfill the same function.

The electrical connection means 19 between the support 1 and the turning platform 5 comprise movable contacts and corresponding fixed contacts. The movable contacts comprise two brushes 20 and 21, an interior one and an exterior one, arranged in a coplanar fashion.

The fixed contacts area are arranged over a detachable support element 38 and comprise an interior contact 22 and an exterior contact 23. The exterior contact is shaped like a circular crown and interior contact 22 is concentric with respect to the exterior contact 23 and is circular-shaped. The support element 38 of the fixed contacts is essentially discoid-shaped and is fixed to the support platform 1. Insulating material is preferred in order to avoid short- circuits.

The brushes 20 and 21 of the movable contacts comprise a brush holder 24 which is integrally linked to extension 7 of the turning platform 5 has a general cylindrical shape on the exterior and is of the type that incorporate a self-adjusting tightening element. In the embodiment example, the self-adjusting element consists of a gauge spring arranged on each of the brushes. These springs act on the brushes 20 and 21, exerting the exact pressure in order to keep them in contact with the fixed contacts 22 and 23.

Opening the support element 38 is the way to the electrical connection means 19 in order to change the brushes, clean or check the connection elements.

The means for holding a connection cable through comprise a hole 32 arranged in the extension 7 of the support 1, another hole 34 arranged in extension 15 of the turning platform 5 and a hole 33 which allows the cable to pass through to the fixed contacts 22 and 23. Furthermore, the means for holding a connection cable through comprise a washer 26, in the embodiment example it is arranged above the bearing 18, provided with a trap-door 27 allowing the connection cable through from the interior of extension 15 to the lower face of platform 5, where , for example, it can be connected to a normalized current collector.

Alternatively, the washer 26 can be provided with a plurality of holes in its surface instead of the trap-door 27.

The means for holding a connection cable through allow any type of cable through from the lower area of driven wheel 4 to the upper area of the same, just under the turning platform 5.

In the embodiment example shown, the turning platform 5 has a current collector 28, whose purpose is to supply the turning platform 5 with electricity.

Turning platform 5 comprises a decorative element or casing 29, integrally linked to it by means of a plurality of screws 30. In accordance with a preferred embodiment, the casing 29 and the turning platform 5 are joined by welding or special glues depending on the material.

Screw 31 prevents dirt in general from getting into the interior of upper cavity 35 of extension 15 of turning platform 5 as long as no external element is fitted to said extension 15.

In the example of the embodiment shown in the drawings, turning platform 5 has to have some technical features for the device to work correctly. Among these, the most important is the weight of the platform, which has to be enough to be dragged by driven wheel 4 when it is not subject to any external force. This way ensures that the rotation movement depends on the driven wheel 4, when external forces are not applied.

When turning platform 5 is subject to external forces, the latter turns on the coupling means 6 between the driven wheel 4 and the turning platform 5, that is to say bearing 18, so that the driven wheel 4 goes on making its continuous movement, whereas the turning platform 5 can turn in the opposite direction and at a different speed, it can be stopped, or even turn in the same direction and at greater speed than the driven wheel 4; once external forces stop being applied, the turning platform regains the movement and momentum that the driven wheel 4 causes.

It should be highlighted that in the embodiment example a transmission movement has been established between driving motor 3 and driven wheel 4, which is done by friction, or alternatively the transmission can be done by gears or any other way.

According to other possible practical embodiments, the turning platform 5 can have any shape setting and is capable of directly receiving on it the element or device to which it is intended to provide the rotation movement, irrespective of its weight, appearance or size.

The activating device for turning platforms object of the present invention can be used to provide a rotation movement to any object that may be put on it.

## Claims

1. Activating device for turning platform, which comprises a support (1); a motor (2) that moves a driving wheel (3); a wheel (4) driven by the driving wheel (3); a turning platform (5) coaxial to the driven wheel (4) and a means (19) for the electrical connection between the support (1) and the turning platform (5), **characterized in that** the driven wheel (4) and the turning platform are linked together by coupling means (6) which comprise a turning element by rolling and/or friction, so that it allows the turning platform (5) to support external forces, opposed to the turning of the driven wheel (4), that may cause the stopping or even the turning of the wheel in the opposite direction of the turning platform, without altering or affecting the movement of the driven wheel.

2. Activating device for turning platform according to claim 1, **characterized in that** the electrical connection means (19) between the support (1) and the turning platform (5) comprise movable contacts and corresponding fixed contacts for the conduction of electricity from the fixed part to the movable one of the device through the interior of the shaft.

3. Activating device for turning platform according to claim 2, **characterized in that** the movable contacts comprise two brushes, an interior one (22) and an exterior (23) one which, in turn, comprise a brush holder (24) of the type that incorporate a self-adjusting tightening element (25) and the fixed contacts comprise an exterior contact shaped like a circular crown, and an inner contact (22) concentric with respect to the outer one.

4. Activating device for turning platform according to claim 1, **characterized in that** it comprises a means for holding at least one connection cable through its interior to the exterior surface of the turning platform (5).

5. Activating device for turning platform according to claim 4, **characterized in that** the means for holding at least one connection cable comprise a washer (26) provided with at least one trap door (27).

6. Activating device for turning platform according to claim 1, **characterized in that** the turning platform (5) has a current collector (28).

7. Activating device for turning platform according to claim 1, **characterized in that** the turning element by rolling and/or friction of the coupling means (6) between the driven wheel (4) and the turning platform (5) comprises an axial bearing (18).

8. Activating device for turning platform according to claim 1, **characterized in that** the turning element by rolling and/or friction of the coupling means (6) between the driven wheel (4) and the turning platform (5) comprises a washer made out of some material which is relatively sliding.
